# FASCICULE DE BREVET EUROPEEN

(11) **EP 1 036 731 B1**
(45) Date de publication et mention de la délivrance du brevet: **11.02.2004**
(21) Numéro de dépôt: 00400734.0
(22) Date de dépôt: 16.03.2000
(51) Int. Cl.: B62J 15/02

(54) **Dispositif de fixation de garde-boue de bicyclette**
Befestigungsanordnung für Fahrradschutzblech
Bicycle mudguard mounting arrangement

(30) Priorité: 16.03.1999 FR 9903251
(43) Date de publication de la demande: 20.09.2000
(60) Demande divisionnaire: 03009142.5
(73) Titulaire: Z E F A L, 93300 Aubervilliers (FR)
(72) Inventeur: Brunet, Patrice, 92200 Neuilly sur Seine (FR)
(74) Mandataire: Pontet, Bernard

(56) Documents cités:
- EP-A- 0 742 137
- EP-A- 0 967 141
- DE-U- 29 614 001
- GB-A- 303 989
- GB-A- 2 278 323

## Description

La présente invention concerne un système servant à la fixation d'un garde-boue de bicyclette aux tringles radiales partant du moyeu de la roue.

Un système de ce genre est par exemple décrit dans le brevet européen EP 0 742 137. Il comprend un corps en matériau plastique comprenant une paire de perçages parallèles pour le passage de deux tringles, une rainure destinée à loger le bord longitudinal du garde-boue et un perçage, essentiellement perpendiculaire aux perçages de ladite paire, débouchant à l'intérieur de ladite rainure et permettant à l'aide d'une vis autotaraudeuse de fixer à la fois ledit dispositif sur les tringles et de fixer le garde-boue.

Le document DE 29614001 divulgue un système comprenant 3 éléments :
un garde-boue muni d'un bord longitudinal avec un perçage ;
un dispositif de fixation du garde-boue à la tringle comprenant :
   deux demi-coquilles adaptées à enserrer la tringle ;
   une rainure, ménagée dans l'une des demi-coquilles, dans laquelle le bord longitudinal du garde-boue est adapté à être inséré ; et
   un perçage ménagé transversalement dans les deux demi-coquilles et traversant ladite rainure ; et
   une vis de serrage ayant une double fonction :
      serrer et maintenir ensemble autour de la tringle les deux demi-coquilles du dispositif de fixation ;
      coopérer avec ledit perçage du dispositif dé fixation et ledit perçage du bord longitudinal du garde-boue inséré dans la rainure du dispositif de fixation de manière à immobiliser le garde-boue dans la rainure.

La présente invention a pour but de proposer un système de ce type qui, par rapport aux dispositifs de l'art antérieur, soit moins coûteux à réaliser et permettre d'installer le garde-boue sur le dispositif facilement, notamment sans outils.

Elle propose un système selon la revendication 1.

Le dispositif de fixation du système selon l'invention peut être fabriqué d'un seul tenant, avec des moyens de fixation du garde-boue à la tringle qui font partie intégrante du dispositif, ce qui permet de fixer le garde-boue sans outils.

Le dispositif de fixation du système selon l'invention peut en outre être caractérisé par un corps allongé et au moins une patte de fixation ayant une zone de raccordement avec la face extérieure dudit corps et faisant saillie de manière à définir entre elle et la surface extérieure du corps les moyens de fixation du bord longitudinal du garde-boue.

Le dispositif est de préférence réalisé en matériau synthétique, notamment par moulage.

Il peut prendre la forme d'un corps allongé avec une ou plusieurs pattes de fixation raccordées au corps allongé et recourbées vers ledit corps, formant entre elles et ledit corps la rainure de retenue du bourrelet du garde-boue.

La retenue du bourrelet longitudinal du garde-boue dans la rainure peut comprendre aussi une patte supérieure située au dessus de la ou des pattes de fixation et dont la face inférieure est adaptée à contacter la paroi extérieure du garde-boue. On peut aussi prévoir en outre un pincement de la paroi du garde-boue entre la ou les pattes de fixation et une ou plusieurs pattes supérieures.

Selon un autre exemple de réalisation, le dispositif est constitué de deux demi-coquilles qui sont assemblées et fixées ensemble en enserrant la tringle.

De préférence, et de manière à proposer un dispositif se montant entièrement sans outils, les moyens de fixation du dispositif à la tringle comportent une ouverture débouchant perpendiculairement dans un passage pour la tringle et des moyens de blocage de la tringle introduits dans ladite ouverture et coopérant avec la tringle. Ces moyens de blocage sont par exemple constitués d'un bouchon ayant deux pattes de blocage adaptées à venir s'insérer de part et d'autre de la tringle, la face intérieure desdites pattes comportant des stries adaptées à coopérer avec des stries complémentaires ménagées sur la surface extérieure de la tringle selon une direction perpendiculaire à l'axe général de la tringle. En outre, en disposant les stries sur la tringle sur une certaine hauteur, on peut réaliser un moyen de réglage du dispositif en fonction du bicyclette à équiper.

La présente invention sera mieux comprise et d'autres caractéristiques et avantages apparaîtront à la lumière de la description qui va suivre d'exemples de réalisation, description faite en référence aux dessins sur lesquels:
- la figure 1 montre schématiquement un premier exemple de réalisation du dispositif selon l'invention, ainsi que le garde-boue et la tringle associés ;
- la figure 2 est une vue en coupe longitudinale du dispositif selon la ligne II-II de la figure 1;
- la figure 3 est une vue en coupe selon la ligne III-III de la figure 2 montrant également la tringle et le bouchon de blocage de la tringle ;
- la figure 4 est une vue en coupe similaire à la figure 2 avec le garde-boue en place illustrant les moyens de retenue et de butée ;
- la figure 5 montre en coupe similaire à la figure 4 un deuxième exemple de réalisation du dispositif selon l'invention, illustrant les moyens de retenue ;
- la figure 6 est une vue en coupe du dispositif de la figure 5 montrant les moyens de butée ;
- la figure 7 est une vue en élévation du dispositif selon la flèche VII de la figure 6 ;
- la figure 8 est une vue en coupe similaire à la figure 6 illustrant une première variante de réalisation des moyens de butée du dispositif ;
- la figure 9 est une vue en élévation du dispositif selon la flèche IX de la figure 8 ;
- la figure 10 est une vue en perpective montrant une deuxième variante de réalisation des moyens de butée du dispositif et le garde-boue associé ;
- la figure 11 est une vue de côté montrant un troisième exemple de réalisation du dispositif selon l'invention ;

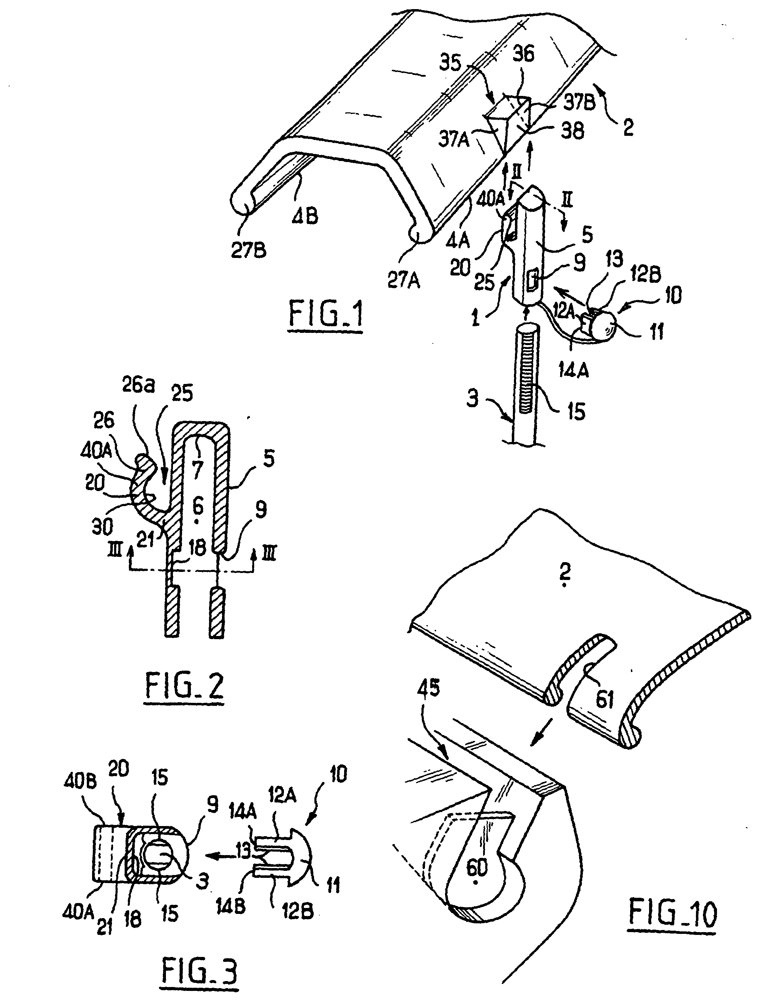

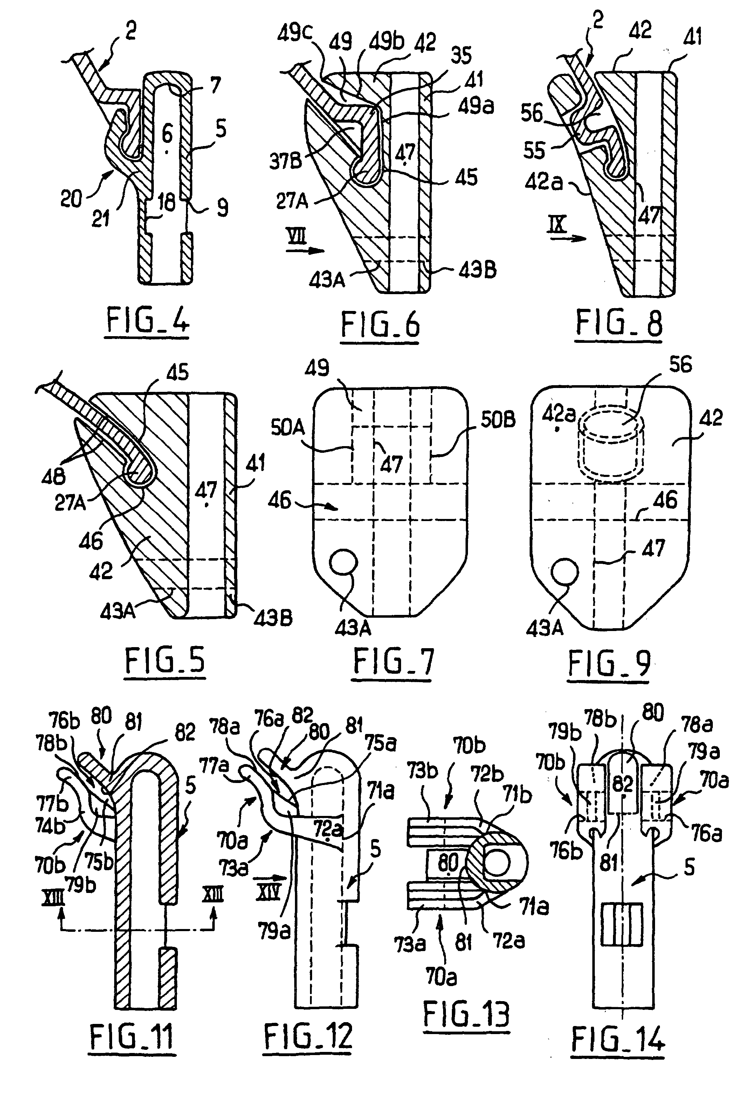

- la figure 1 2 est une vue en coupe longitudinale du dispositif de la figure 11 ;
- la figure 13 est une vue en coupe selon la ligne XIII-XIII de la figure 11;
- la figure 14 est une vue en élévation selon la flèche XIV de la figure 12 ; et

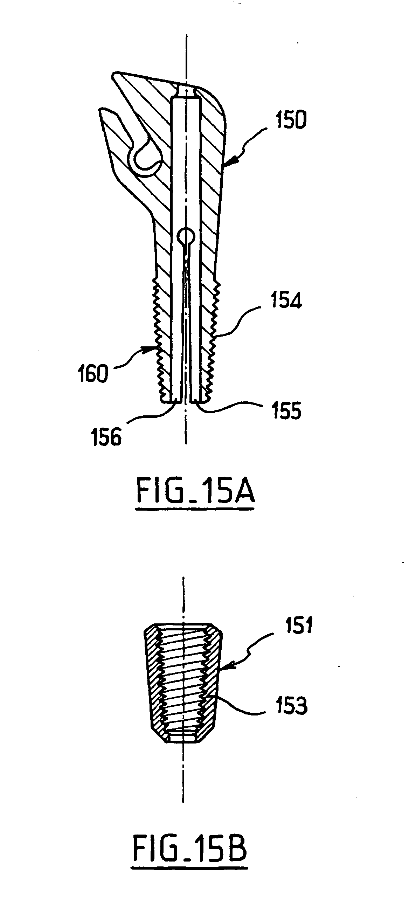

- les figures 15A et 15B représentent respectivement une vue en coupe d'un exemple particulier de réalisation du corps d'un dispositif selon l'invention et une vue en coupe d'un écrou conique de fixation mis en oeuvre dans ce dispositif.

En se référant aux figures 1 à 4, le dispositif de fixation 1 selon l'invention est destiné à fixer un garde-boue 2 à une tringle 3 partant du moyeu de la roue du bicyclette (non représenté). Deux dispositifs de fixation 1 sont utilisés pour fixer les deux bords longitudinaux 4A et 4B du garde-boue 2.

Le dispositif de fixation 1 comporte un corps allongé 5 dans lequel est prévu un passage 6 pour la tringle 3 et fermé par un fond 7. Pour la fixation du dispositif 1 à la tringle 3, une ouverture 9 est ménagée dans le corps 5 débouchant perpendiculairement dans le passage 6 coopérant avec un bouchon 10 ayant une tête 11 et deux pattes de blocage 1 2A, 12B s'étendant dans des plans parallèles. Les faces en regard l'une de l'autre des pattes de blocage 12A, 12B sont munies de stries 13 parallèles s'étendant dans une direction perpendiculaire au bord avant respectif 14A, 14B de chacune des pattes 12A, 12B. Sur la tringle 3 sont également ménagées des stries 1 5 dans des plans perpendiculaires à l'axe de la tringle 3 et sur deux zones latérales diamétralement opposées. Le diamètre du passage 6 dans le corps 5 est tel que, une fois la tringle 3 introduite, le bouchon 10 peut être insérer par l'ouverture 9 de manière que ses deux pattes de blocages 12A, 12B, encadrent la tringle 3, les stries 13 du bouchon 10 et les stries 15 de la tringle s'interengageant pour obtenir le blocage du dispositif 1 sur la tringle. La hauteur des stries 15 sur les zones latérales de la tringle est telle qu'un réglage du dispositif est possible selon la bicyclette à équiper. Un décrochement 18, ménagé dans l'épaisseur de la paroi avant 18 du corps 5 en regard de l'ouverture 9, sert à caler les extrémités des pattes de blocage 12A, 12B lorsque le bouchon 10 est en place.

Pour la fixation du garde-boue, une patte de fixation 20 est ménagée en saillie à l'opposé de l'ouverture 9. Comme on le voit sur la figure 3 notamment, la largeur de la patte 20 est sensiblement égale à la largeur ou diamètre du corps 5. La patte 20 comporte une zone de raccordement 21 avec le corps 5 du dispositif au dessus du décrochement 18. La patte de fixation 20 s'étend globalement en direction de l'extrémité supérieure 22 du corps 5 à distance de la paroi extérieure 24 du corps 5 de manière à ce qu'une rainure 25 soit définie entre cette patte de fixation 20 et ladite paroi 24. Une portion d'extrémité 26 de la patte 20 est recourbée en direction du corps allongé 5 de manière que la rainure 25 présente une forme complémentaire à un bourrelet 27A, 27B terminant respectivement dans le bord longitudinal 4A, 4B du garde-boue et de manière que la rainure soit pourvue d'un fond élargi 30.

Le dispositif 1 ainsi que le bouchon 10 et un cordon 32 reliant le bouchon au corps 5 sont fabriqués d'un seul tenant par moulage d'un matériau synthétique. Ce matériau autorise une certaine flexibilité de la patte de fixation 20 autour de sa zone de raccordement et permet au bourrelet du bord du garde-boue d'être introduit jusque dans le fond élargi 30 de la rainure 25, la patte 20 reprenant ensuite sa position de repos.

Selon l'invention, des moyens de butée sont également prévus pour empêcher un déplacement longitudinal du garde-boue. Ils comprennent un bossage 35 ménagé en saillie sur l'extérieur du garde-boue dans le prolongement du bord longitudinal 4A, 4B du garde-boue. Le bossage 35 présente une arrête saillante 36, deux bords latéraux 37A et 37B et un bord avant 38 qui s'étend jusqu'au bord longitudinal 4A, 4B. La patte de fixation 20 est adaptée à être introduite dans le bossage 35, de sorte que la butée de ses bords latéraux 40A, 40B contre la face intérieure des bords latéraux 37A, 37B du bossage, empêche le déplacement longitudinal du garde-boue.

Sur les figures 5 à 7, est représenté un autre exemple de réalisation dans lequel, le dispositif est constitué de demi-coquilles arrière 41 et avant 42 qui viennent enserrer la tringle en comportant chacune à cet effet une rainure de section demi-circulaire sur toute sa hauteur, les deux demi-coquilles étant assemblées et fixées à la tringle à l'aide d'une vis de serrage (non représentée) introduite dans deux perçages taraudés 43A, 43B ménagés perpendiculairement et dans le prolongement l'un de l'autre dans les deux demi-coquilles. L'extrémité inférieure des demi-coquilles est conformée en pointe. La rainure de retenue, référencée 45 ici, du bourrelet 27A, 27B, du garde-boue est ménagée dans la demi-coquille avant 42 laquelle présente à cet effet une plus grande épaisseur que la demi-coquille arrière 43. La rainure 45 comporte un fond élargi 46 de forme complémentaire au bourrelet 27A, 27B et une portion inclinée 48 dans laquelle se trouve le bord du garde-boue en arrière du bourrelet. Comme on le voit sur la figure 6, pour réaliser les moyens de butée empêchant le déplacement dans le sens longitudinal du garde-boue, la rainure 45 présente une zone élargie du côté du passage 47 de la tringle, centré par rapport à celui-ci, et formant un logement 49 dans lequel le bossage 35 en saillie sur l'extérieur du garde-boue est destiné à être introduit. Le logement 49 comporte une paroi arrière 49a destinée à venir au contact du bord avant droit 37B du bossage 35 et une paroi supérieure 49b inclinée reliant la paroi arrière 49a à l'entrée 49c de la rainure 45 et des parois latérales 50A, 50B (voir figure 7), les bords latéraux 37A, 37B du bossage venant en butée contre ces parois latérales.

Les figures 8 et 9 montrent, par rapport à l'exemple des figures 5 à 7, une première variante de réalisation des moyens de butée dans laquelle, un bossage 55 est cette fois ménagé en saillie vers l'intérieur du garde-boue, coopérant avec un logement cylindrique 56 ménagé dans la demi-coquille avant 42 en direction de la paroi avant 42a de celle-ci et débouchant dans la rainure de retenue 45 du garde-boue.

La figure 10 montre une deuxième variante de réalisation des moyens de butée comprenant une paroi 60 ménagée perpendiculairement dans le fond de la rainure 45 à distance des extrémités de la rainure introduite dans une encoche 61 ménagée transversalement dans le bord du garde-boue 2.

Les figures 11 à 14 illustrent un troisième exemple de réalisation de l'invention. Cet exemple présente des points communs avec le premier exemple montré aux figures 1 à 4, en ce qui concerne le corps 5 (à l'exception du décrochement 18 qui n'est pas reproduit ici) et les moyens de fixation du dispositif à la tringle, qui ne seront donc pas décrits ici. Le dispositif selon cet exemple est caractérisé par la présence de deux pattes de fixation 70a et 70b, possédant, comme on le voit mieux sur la figure 12, des zones de raccordement respectivement 71 a, 71 b, au corps 5 du dispositif situées latéralement, les pattes encadrant ainsi le corps 5 en s'étendant vers l'avant de celui-ci. Plus précisément ici et comme on le voit sur la figure 13, les pattes comprennent une première portion 72a, 72b leur permettant de s'écarter du corps 5 et vers l'avant de celui-ci, puis une seconde portion 73a, 73b dans laquelle sont ménagés les moyens de fixation du garde-boue, lesdites seconde portions de chaque patte s'étendant globalement dans des plans parallèles. Comme on le voit de côté sur les figures 11 et 12, la seconde portion 73a, 73b comprend une partie 74a, 74b recourbée vers le haut du corps 5 formant, avec la paroi avant du corps 5, le fond respectivement 75a, 75b d'une rainure 76a, 76b, adapté à coopérer avec le bourrelet longitudinal 27A, 27B du garde-boue et une partie d'extrémité 77a, 77b recourbée vers l'extérieur du dispositif de manière à former une surface supérieure 78a, 78b adaptée à venir en contact avec la face intérieure du garde-boue. Dans cet exemple de réalisation, il est prévu en outre une patte supérieure 80 située entre les pattes de fixation 70a et 70b et ayant une zone de raccordement 81 au corps 5 située au dessus du plan contenant les zones de raccordement 71a, 71b desdites pattes de fixation. Cette patte supérieure 80 présente une face inférieure 82 s'étendant dans un plan parallèle à celui contenant la face supérieure 78a, 78b de la partie d'extrémité des pattes de fixation et adapté à venir au contact de la surface extérieure de la paroi du garde-boue. Les moyens de butée empêchant le déplacement dans le sens longitudinal du garde-boue sont ici constitués d'une paroi 79a, 79b disposée dans chaque rainure 76a, 76b coopérant chacune avec une encoche, ménagée à cet effet transversalement dans le bord longitudinal du garde-boue, comme c'est le cas dans la variante représentée à la figure 10.

Lorsque le garde-boue est en place, son bourrelet longitudinal 27A, 27B, est logé dans le fond 75a, 75b, des deux rainures 76a, 76b, des pattes de fixation, ses encoches étant placées sur les parois de butée 79a, 79b correspondantes. La paroi du garde-boue en arrière du bourrelet 27A, 27B est pincée par les portions d'extrémité 77a, 77b des pattes de fixation et par la patte supérieure 80, permettant ainsi d'assurer une meilleure retenue du bord longitudinal du garde-boue.

Dans un mode de réalisation particulièrement avantageux illustré par les figures 15A et 15B, le dispositif de fixation selon l'invention 150 comprend, au titre des moyens de fixation à la tringle, dans la partie du serre-tringle prévue pour coiffer la tringle, deux ailes de resserrage 155, 156 définissant un passage de tringle 160 sensiblement conique avec une surface extérieure conique filetée 154 coopérant avec un écrou conique 151 taraudé dans sa surface intérieure 153. Ce mode de fixation de la tringle au dispositif selon l'invention est particulièrement efficace car le serrage de l'écrou conique garantit un verrouillage de la position relative de la tringle dans le passage de tringle.

Il va de soi que d'autres variantes de réalisation sont possibles, notamment en ce qui concerne les moyens de fixation du dispositif à la tringle. Par exemple pour améliorer le guidage de l'introduction du bouchon de fixation coopérant avec la tringle et son maintien on peut prévoir des chanfreins. Egalement, à la place ou en complément du décrochement 18 visible sur la figure 3 qui permet de caler l'extrémité des pattes du bouchon de fixation, on pourrait prévoir des décrochements dans la paroi du corps pour loger la tête du bouchon.

En variante, on pourrait également prévoir des moyens de guidage du positionnement de la tringle, comme une conformation concave de la face intérieure de la paroi du corps dans laquelle viendrait se caler la tringle, ou bien un fond pour ledit corps dans lequel serait ménagé un perçage oblong. De même au niveau de l'ouverture dans laquelle est introduit le bouchon, on pourrait prévoir des moyens de positionnement de la tringle de ce type, par exemple une ou plusieurs cloisons raccordées perpendiculairement à la paroi du corps et comportant un perçage oblong pou le passage de la tringle.

Par ailleurs, au lieu d'avoir deux demi-coquilles, on pourrait avoir à la place un seul corps de dispositif dans lequel serait par exemple ménagé un passage pour la tringle.

Le dispositif pourrait comporter également un deuxième passage de tringle.

Par ailleurs encore, on peut alléger le dispositif et/ou améliorer l'élasticité, par exemple de la patte de fixation supérieure, en enlevant de la matière dans les parties où l'épaisseur le permet.

## Revendications

1. Système de fixation de garde-boue (2) de bicyclette , comprenant :
- un garde-boue (2) muni d'un bord longitudinal (4A,4B) avec un bourrelet (27A,27B) ;
- un dispositif de fixation (1) du garde-boue à la bicyclette comprenant au moins une rainure (25,45,76a,76b) dans laquelle est introduit ledit bord longitudinal (4A,4B) du garde-boue, ladite rainure présentant un fond de retenue (46,75a,75b) de forme complémentaire audit bourrelet (27A,27B) du bord longitudinal du garde-boue,
**caractérisé en ce que** :
ledit dispositif de fixation (1) du garde-boue comprend une paroi (60, 79a,79b) ménagée dans ladite rainure coopérant avec une encoche (61) de forme complémentaire ménagée transversalement dans le bord longitudinal (4A, 4B) dudit garde-boue, formant des moyens d'empêchement du déplacement longitudinal du garde-boue dans la rainure.

2. Système selon la revendication 1, **caractérisé en ce que** le dispositif de fixation (1) présente un corps allongé (5) et au moins une patte de fixation (20, 70a, 70b) ayant une zone de raccordement (21, 71a, 71b) avec la face extérieure dudit corps et faisant saillie de manière à définir, entre elle et la surface extérieure du corps, la rainure et l'encoche coopérant avec le bord longitudinal du garde-boue.

3. Système selon la revendication 2, **caractérisé en ce que** le dispositif de fixation (1) comporte deux pattes de fixation (70a,70b) définissant chacune une rainure (75a, 75b) coopérant avec le bord latéral du garde-boue.

4. Système selon la revendication 3, **caractérisé en ce que** le dispositif de fixation (1) du garde-boue comportent une patte supérieure (80) ayant une zone de raccordement (81) au corps (5) située entre les deux pattes de fixation (70a,70b) au dessus de leur zone de raccordement (71a,71b) respective, ladite patte supérieure étant destinée à venir au contact de la surface extérieure de la paroi du garde-boue.

5. Système selon la revendication 3 ou 4, **caractérisé en ce que** les pattes de fixation (70a, 70b) du dispositif de fixation (1) présentent une portion d'extrémité (77a,77b) avec une surface supérieure (78a,78b) adaptée à venir au contact de la surface intérieure du garde-boue.

6. Système selon l'une des revendications 3 à 5, **caractérisé en ce que** dans la rainure (76a,76b) ménagée entre chaque patte de fixation et le corps des moyens de fixation au garde-boue est prévue ladite cloison (79a,79b), deux encoches de forme complémentaire étant ménagées perpendiculairement dans le bord longitudinal du garde-boue (2) destinées à coopérer chacune avec l'une des cloisons.

7. Système selon l'une des revendications 1 à 6, **caractérisé en ce qu'**il comporte une tringle (3), le dispositif de fixation (1) étant constitué de deux demi-coquilles (41,42) destinées à être assemblées et fixées sur ladite tringle à l'aide d'une vis de fixation, la rainure (46) de retenue du bord longitudinal du garde boue étant ménagée dans la demi-coquille avant (42).

8. Système selon l'une des revendications précédentes, **caractérisé en ce qu'**il comporte une tringle (3), le dispositif de fixation (1) comportant des moyens de fixation à la tringle comprenant une surface extérieure conique filetée coopérant avec un écrou conique taraudé.

9. Système selon la revendication 8, **caractérisé en ce que** les moyens de fixation à la tringle du dispositif de fixation (1) comportent deux ailes de resserrage définissant un passage de tringle conique présentant une surface extérieure filetée.

10. Système selon l'une des revendications précédentes, **caractérisé en ce qu'**il comporte une tringle (3), le dispositif de fixation (1) comportant des moyens de fixation à la tringle comprenant une ouverture (9) débouchant perpendiculairement dans un passage pour la tringle (6) et des moyens de blocage (10) de la tringle introduits dans ladite ouverture et coopérant avec la tringle.

11. Système selon la revendication 10, **caractérisé en ce que** les moyens de blocage du dispositif de fixation (1) à la tringle comprennent un bouchon (10) ayant deux pattes (12A,12B) adaptées à venir s'insérer de part et d'autre de la tringle, la face intérieure desdites pattes comportant des stries (13) adaptées à coopérer avec des stries complémentaires (15) ménagées sur la surface extérieure de la tringle selon une direction perpendiculaire à l'axe général de la tringle.

12. Système selon la revendication 11, **caractérisé en ce que** les stries (13) des moyens de blocage (10) s'étendent sur des portions de la tringle diamétralement opposées qui sont destinées à coopérer avec les pattes du bouchon.

13. Système selon la revendication 11 ou 12, **caractérisé en ce que** les stries (13) sur la tringle s'étendent sur une hauteur permettant un réglage du dispositif.

14. Système selon l'une des revendications 10 à 13, **caractérisé en ce que** l'ouverture (9) perpendiculaire est située du côté opposé aux moyens de fixation (20) du bord longitudinal du garde-boue.

15. Système selon l'une des revendications précédentes, **caractérisé en ce que** le dispositif de fixation (1) est réalisé d'un seul tenant en matériau synthétique.

16. Système selon l'une des revendications précédentes, **caractérisé en ce que** le dispositif de fixation (1) est réalisé par moulage.

17. Système selon l'une des revendications 11 à 16, **caractérisé en ce que** le dispositif de fixation (1) est réalisé par moulage en matériau synthétique d'un seul tenant avec le bouchon de blocage, un fil en matériau synthétique raccordant ledit bouchon au corps du dispositif.

18. Système selon l'une des revendications précédentes, **caractérisé en ce que** le passage pour la tringle présente un fond (7).

## Patentansprüche

1. System zur Befestigung eines Fahrradschutzblechs (2), aufweisend:
- ein Schutzblech (2), versehen mit einer Längskante (4A, 4B) mit einer Wulst (27A, 27B);
- eine Befestigungsvorrichtung (1) für das Fahrradschutzblech, umfassend zumindest eine Nut (25, 45, 76a, 76b), in die die Längskante (4A, 4B) des Schutzblechs eingesetzt ist, wobei die Nut einen Halteboden (46, 75a, 75b) mit einer zur Wulst (27A, 27B) der Längskante des Schutzblechs komplementären Form aufweist,
**dadurch gekennzeichnet, dass**
die Befestigungsvorrichtung (1) für das Schutzblech eine in der Nut angeordnete Wand (60, 79a, 79b) umfaßt, die in eine Aussparung (61) mit komplementärer Form, die quer in die Längskante (4A, 4B) des Schutzblechs eingelassen ist, eingreift und die ein Mittel zur Verhinderung der Längsverschiebung des Schutzblechs in der Nut bildet.

2. System gemäß Patentanspruch 1, **dadurch gekennzeichnet, dass** die Befestigungsvorrichtung (1) einen länglichen Körper (5) und zumindest eine Befestigungsklaue (20, 70a, 70b) aufweist, die eine Anschlusszone (21, 71a, 71b) mit der Außenseite des Körpers hat und derart hervorsteht, dass zwischen ihr und der Außenfläche des Körpers die Nut und die Aussparung ausgebildet sind, die mit der Längskante des Schutzblechs zusammenwirken.

3. System gemäß Patentanspruch 2, **dadurch gekennzeichnet, dass** die Befestigungsvorrichtung (1) zwei Befestigungsklauen (70a, 70b) hat, wobei jede eine Nut (75a, 75b) begrenzt, die mit der Längskante des Schutzblechs zusammenwirkt.

4. System gemäß Patentanspruch 3, **dadurch gekennzeichnet, dass** die Befestigungsvorrichtung (1) des Schutzblechs eine obere Klaue (80) mit einer Anschlusszone (81) zum Körper (5) aufweist, die zwischen den beiden Befestigungsklauen (70a, 70b) über deren jeweiligen Anschlusszonen (71a, 71b) liegt, wobei die obere Klaue dazu bestimmt ist, die Außenfläche der Schutzblechwand zu berühren.

5. System gemäß Patentanspruch 3 oder 4, das **dadurch gekennzeichnet ist, dass** die Befestigungsklauen (70a, 70b) der Befestigungsvorrichtung (1) ein Endstück (77a, 77b) mit einer Oberseite (78a, 78b) aufweisen, die angepaßt ist, die Innenseite des Schutzblechs zu berühren.

6. System gemäß einem der Patentansprüche 3 bis 5, **dadurch gekennzeichnet, dass** in der Nut (76a, 76b), die zwischen jeder Befestigungsklaue und dem Körper der Schutzblechbefestigungsmittel gebildet ist, die Zwischenwand (79a, 79b) vorgesehen ist, wobei zwei Aussparungen mit komplementärer Form, die quer in die Längskante des Schutzblechs (2) eingelassen sind, dazu bestimmt sind, jeweils mit einer der Zwischenwände zusammenzuwirken.

7. System gemäß einem der Patentansprüche 1 bis 6, **dadurch gekennzeichnet, dass** es eine Strebe (3) umfaßt, wobei die Befestigungsvorrichtung (1) von zwei Halbschalen (41, 42) gebildet ist, die mit Hilfe einer Befestigungsschraube zusammenfügbar und an der Strebe befestigtbar sind, und wobei die Haltenut (46) für die Längskante des Schutzblechs in die vordere Halbschale (42) eingelassen ist.

8. System gemäß einem der vorhergehenden Patentansprüche, **dadurch gekennzeichnet, dass** es eine Strebe (3) umfaßt, wobei die Befestigungsvorrichtung (1) Mittel zur Befestigung an der Strebe hat, die eine kegelförmige und mit Außengewinde versehene Außenfläche, die mit einer Kegelmutter mit Innengewinde zusammenwirkt, umfassen.

9. System gemäß Patentanspruch 8, **dadurch gekennzeichnet, dass** die Mittel der Befestigungsvorrichtung (1) zur Befestigung an der Strebe aus zwei Spannschenkeln bestehen, die eine kegelförmige Strebendurchführung bilden und eine mit Außengewinde versehene Außenfläche haben.

10. System gemäß einer der vorhergehenden Patentansprüche, **dadurch gekennzeichnet, dass** es eine Strebe (3) umfaßt, wobei die Befestigungsvorrichtung (1) Mittel zur Befestigung an der Strebe besitzt, umfassend eine Öffnung (9), die senkrecht in eine Durchführung für die Strebe (6) mündet, sowie Arretiermittel (10) für die Strebe, die in die Öffnung eingeführt sind und mit der Strebe zusammenwirken.

11. System gemäß Patentanspruch 10, **dadurch gekennzeichnet, dass** die Arretiermittel für die Befestigungsvorrichtung (1) an der Strebe eine Kappe (10) mit zwei Klauen (12A, 12B) umfaßt, die angepasst sind, die Strebe von beiden Seiten zu umgreifen, wobei die Innenfläche der Klauen Rillen (13) aufweist, die angepasst sind, mit komplementären Rillen (15), die senkrecht zur Hauptachse der Strebe in die Außenfläche der Strebe eingefügt sind, zusammenwirken.

12. System gemäß Patentanspruch 11, **dadurch gekennzeichnet, dass** sich die Rillen (13) der Arretierungmittel (10) auf denjenigen diametral gegenüberliegenden Abschnitten der Strebe erstrecken, die dazu bestimmt sind, mit den Klauen der Kappe zusammenzuwirken.

13. System gemäß Patentanspruch 11oder 12, **dadurch gekennzeichnet, dass** sich die Rillen (13) in der Strebe über eine Höhe erstrecken, die die Justierung der Vorrichtung erlaubt.

14. System gemäß einem der Patentansprüche 10 bis 13, **dadurch gekennzeichnet, dass** sich die senkrechte Öffnung (9) auf der gegenüberliegenden Seite der Befestigungsmittel (20) für die Längskante des Schutzblechs befindet.

15. System gemäß einem der vorhergehenden Patentansprüche, **dadurch gekennzeichnet, dass** die Befestigungsvorrichtung (1) einstückig aus Kunststoff ausgeführt ist.

16. System gemäß einem der vorhergehenden Patentansprüche, **dadurch gekennzeichnet, dass** die Befestigungsvorrichtung (1) durch Formgießen hergestellt ist.

17. System gemäß einem der Patentansprüche 11 bis 16, **dadurch gekennzeichnet, dass** die Befestigungsvorrichtung (1) mit der Feststellkappe durch Formgießen aus Kunststoff in einem Stück gefertigt wird, wobei eine Kunststoffschnur die Kappe mit dem Körper der Vorrichtung verbindet.

18. System gemäß einem der vorhergehenden Patentansprüche, **dadurch gekennzeichnet, dass** die Durchführung für die Strebe einen Boden (7) aufweist.

## Claims

1. Securing system for a bicycle mudguard (2) comprising:
- a mudguard (2) provided with a longitudinal edge (4A, 4B) with a flange (27A, 27B);
- a device (1) for securing the mudguard to the bicycle comprising at least one groove (25, 45, 76a, 76b) into which is introduced said longitudinal edge (4A, 4B) of the mudguard, said groove having a retaining base (46, 75a, 75b) with a shape complementary to said flange (27A, 27B) on the longitudinal edge of the mudguard,
**characterized in that**:
said mudguard securing device (1) comprises a wall (60, 79a, 79b) arranged in said groove cooperating with a notch (61) with a complementary shape made transversely in the longitudinal edge (4A, 4B) of said mudguard, forming means of preventing the longitudinal displacement of the mudguard in the groove.

2. System according to claim 1, **characterized in that** the securing device (1) has an elongated body (5) and at least one securing tab (20, 70a, 70b) having a connecting area (21, 71a, 71b) with the external surface of said body and projecting so as to define, between it and the external surface of the body, the groove and the notch cooperating with the longitudinal edge of the mudguard.

3. System according to claim 2, **characterized in that** the securing device (1) has two securing tabs (70a, 70b) each defining a groove (75a, 75b) cooperating with the lateral edge of the mudguard.

4. System according to claim 3, **characterized in that** the mudguard securing device (1) has an upper tab (80) having a connecting area (81) to the body (5) situated between the two securing tabs (70a, 70b) above their respective connecting areas (71a, 71b), said upper tab being designed to come into contact with the external surface of the mudguard wall.

5. System according to claim 3 or 4, **characterized in that** the securing tabs (70a, 70b) on the securing device (1) have an end portion (77a, 77b) with an upper surface (78a, 78b) designed to come into contact with the internal surface of the mudguard.

6. System according to any one of claims 3 to 5, **characterized in that** said wall (79a, 79b) is provided in the groove (76a, 76b) formed between each securing tab and the body of the mudguard securing device, two notches with a complementary shape being arranged perpendicularly in the longitudinal edge of the mudguard (2), each designed to cooperate with one of the walls.

7. System according to any one of claims 1 to 6, **characterized in that** it has a rod (3), the securing device (1) being composed of two half-shells (41, 42) designed to be assembled and secured to said rod using a securing screw, the groove (46) to retain the longitudinal edge of the mudguard being arranged in the front half-shell (42).

8. System according to any one of the previous claims, **characterized in that** it has a rod (3), the securing device (1) having means of being secured to the rod comprising a threaded conical external surface cooperating with a tapered threaded nut.

9. System according to claim 8, **characterized in that** the means of securing the securing device (1) to the rod have two clamping wings defining a conical passage for the rod having a threaded external surface.

10. System according to any one of the previous claims, **characterized in that** it has a rod (3), the securing device (1) having means of being secured to the rod comprising an aperture (9) opening perpendicularly onto a passage for the rod (6) and means (10) of locking the rod which are introduced into said aperture and cooperate with the rod.

11. System according to claim 10, **characterized in that** the means of locking the securing device (1) to the rod comprise a plug (10) having two tabs (12A, 12B) designed to be inserted on each side of the rod, the internal surface of said tabs having threads (13) designed to cooperate with complementary threads (15) arranged on the external surface of the rod in a direction perpendicular to the general axis of the rod.

12. System according to claim 11, **characterized in that** the threads (13) on the locking means (10) extend on diametrically opposed portions of the rod which are designed to cooperate with the tabs of the plug.

13. System according to claim 11 or 12, **characterized in that** the threads (13) on the rod extend over a height allowing for the device to be adjusted.

14. System according to any one of claims 10 to 13, **characterized in that** the perpendicular aperture (9) is situated on the opposite side to the means (20) of securing the longitudinal edge of the mudguard.

15. System according to any one of the previous claims, **characterized in that** the securing device (1) is produced all in one piece from synthetic material.

16. System according to any one of the previous claims, **characterized in that** the securing device (1) is produced by moulding.

17. System according to any one of claims 11 to 16, **characterized in that** the securing device (1) is produced by moulding from synthetic material all in one piece with the locking plug, a cord made from synthetic material connecting said plug to the body of the device.

18. System according to any one of the previous claims, **characterized in that** the passage for the rod has a base (7).
